# EUROPÄISCHE PATENTSCHRIFT

(11) **EP 1 182 528 B1**
(45) Veröffentlichungstag und Bekanntmachung des Hinweises auf die Patenterteilung: **19.04.2006**
(21) Anmeldenummer: 01117884.5
(22) Anmeldetag: 23.07.2001
(51) Int. Cl.: G05B 19/418, G05B 19/042

(54) **Industrielle Steuerung auf der Basis verteilbarer Technologischer Objekte**
Industrial control based on distributed technological objects
Commande industrielle basée sur des objets technologiques distribués

(30) Priorität: 03.08.2000 DE 10037971; 03.08.2000 DE 10037990; 08.11.2000 DE 10055168; 08.11.2000 DE 10055169
(43) Veröffentlichungstag der Anmeldung: 27.02.2002
(73) Patentinhaber: SIEMENS AKTIENGESELLSCHAFT, 80333 München (DE)
(72) Erfinder: Ackermann, Thomas, 91074 Herzogenaurach (DE); Birzer, Johannes, 92551 Stulln (DE); Horn, Wolfgang, Dr., 09337 Hohenstein-Ernstthal (DE)

(56) Entgegenhaltungen:
- WO-A-97/12301
- DE-A- 19 853 205
- US-A- 5 453 933
- US-A- 5 576 946

## Beschreibung

Die vorliegende Erfindung betrifft ein Verfahren zur Programmierung bzw. Projektierung einer industriellen Steuerung für eine Produktionsmaschine, wobei die Steuerung ein Gerät aufweist, mit folgenden Schritten:
- Verwendung eines Basissystem mit einer gerätespezifischen Grundfunktionalität,
- Instanziierung Technologischer Objekte,
- Verschaltung der Technologischen Objekte zu Technologischen Objekten komplexer Funktionalität,
- Verteilung und/oder Platzierung der Technologischen Objekte auf dem Gerät, so dass die Technologischen Objekte das Gerät um technologische Funktionalitäten ergänzen,
- Generierung der Kommunikationskanäle zwischen den Technologischen Objekten.

Ein derartiges Verfahren ist beispielsweise aus der US-A-5,453,933 bekannt. Der DE-A-198 53 205 ist ein ähnlicher Offenbarungsgehalt zu entnehmen.

Aus der WO-A-97/12301 ist Entwurfsverfahren für die Automatisierung industrieller Großanlagen bekannt, bei dem das Automatisierungssystem - aufgrund der Dimensionen von Großanlagen trivialerweise - mehrere Geräte aufweist. Bei dem Entwurfsverfahren werden Anlagenkomponenten, also Technologische Objekte, instanziiert und zu Technologischen Objekten komplexer Funtkionalität verschaltet.

Die Aufgabe der vorliegenden Erfindung besteht darin, ein Verfahren zur Programmierung bzw. Projektierung einer Steuerung für eine Produktionsmaschine zu schaffen, bei dem der Programmierer bzw. Projektierer in der Lage ist, bei einer Steuerung, die mehrere Gerät aufweist, die Zuordnung der Technologischen Objekte zu den Geräten in einer für ihn optimalen Art und Weise vorzunehmen.

Die Aufgabe wird, ausgehend von einem Verfahren der eingangs genannten Art, dadurch gelöst,
- dass pro Gerät ein Basissystem mit einer gerätespezifischen Grundfunktionalität verwendet wird,
- dass die Technologischen Objekte auf die Geräte verteilt bzw. auf den Geräten platziert werden und
- dass die Kommunikationskanäle zwischen den Technologischen Objekten einschließlich der geräteübergreifenden Kommunikationskanäle automatisch generiert werden.

Eine vorteilhafte Ausgestaltung der vorliegenden Erfindung liegt darin, dass bei der Generierung der Kommunikationskanäle Qualitätsattribute der Technologischen Objekte eingehalten werden. Durch die Berücksichtigung vom Anwender vorgebbarer Qualitätsanforderungen (z.B. Übertragungszeit, Taktsynchronizität, Broadcast) wird die Geräte- und Netztopologie noch effizienter genutzt und der Anwender braucht bei der Projektierung bzw. Programmierung der Kommunikationskanäle nur Qualitätsattribute als Input für die automatische Generierung der Kommunikationskanäle angeben.

Eine weitere vorteilhafte Ausgestaltung besteht darin, dass die Technologischen Objekte auf unterschiedlich oder gleich performante Hardwaresysteme und/oder Laufzeitsysteme verteilt werden.

Eine weitere vorteilhafte Ausgestaltung der vorliegenden Erfindung liegt darin, dass die Darstellung der Technologischen Objekte in einem Engineering-System durch grafische Elemente und/oder Masken erfolgt. Durch diese grafische Benutzeroberfläche wird der Anwender beim Gebrauch der Technologischen Objekte unterstützt. Produktivität und Qualität der Projektierung bzw. der Programmierung werden dadurch erhöht.

Eine weitere vorteilhafte Ausgestaltung der vorliegenden Erfindung liegt darin, dass Technologieobjekttypen zu Technologischen Paketen zusammengefasst werden. Technologische Pakete stellen eine Clusterung von technologisch und/oder funktional zusammengehörenden Technologieobjekttypen dar. Durch das Hinzuladen von Technologischen Paketen zum Basissystem einer Steuerung können Steuerungen mit jeweils dediziertem Funktionsumfang erhalten werden. Solche Steuerungen haben wenig funktionalen Overhead. Durch die Clusterung und Zuordnung von Technologieobjekttypen zu Technologiepaketen wird zum einen eine Strukturierung und Klassifizierung erreicht, und zum anderen sind die Technologiepakete ein geeignetes Mittel, um die Technologieobjekttypen auf das Runtime-System einer Steuerung zu laden.

Ein Ausführungsbeispiel der Erfindung ist in der Zeichnung dargestellt und wird im folgenden erläutert.
- FIG 1: zeigt in einem Strukturbild ein Engineering-System, das zugehörige Runtime-System und den zu steuernden technischen Prozess,
- FIG 2: zeigt in einem Übersichtsbild, wie ein Anwenderprogramm auf technologische Funktionalität im Runtime-System zugreift,
- FIG 3: zeigt in einer abstrakten Schemadarstellung ein Technologisches Objekt mit Anwenderschnittstelle,
- FIG 4: zeigt in Form eines sog. Verschaltungsdiagrammes Technologische Objekte, die einen Gleichlaufverbund darstellen,
- FIG 5: zeigt einen Gleichlaufverbund mit Umschaltmöglichkeiten zwischen verschiedenen Leitwertquellen und Gleichlaufgesetzen, ebenfalls in Form eines Verschaltungsdiagrammes,
- FIG 6: zeigt in Form eines Verschaltungsdiagrammes die Verschaltung des Technologischen Objektes Messtaster,
- FIG 7: zeigt in Form eines Verschaltungsdiagrammes die Verschaltung des Technologischen Objektes Nocke,
- FIG 8: zeigt in Form eines Verschaltungsdiagrammes Verschaltungen mit Gleichlauftechnologieobjekten,
- FIG 9: zeigt ebenfalls in Form eines Verschaltungsdiagrammes die Zuordnung eines Technologischen Objektes Kurvenscheibe zum mehreren Gleichlaufobjekten,
- FIG 10: zeigt in einem Übersichtsbild die Clusterung von Technologieobjekttypen zu einem Technologiepaket und
- FIG 11: zeigt in einem Übersichtsbild die Kommunikationsstruktur zwischen zwei Geräten.

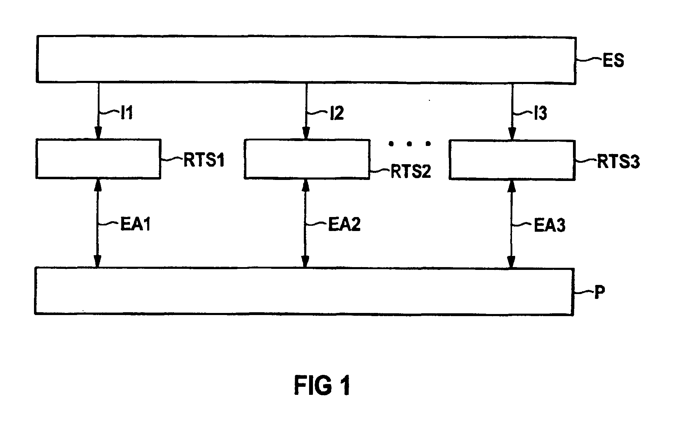

In der Darstellung gemäß FIG 1 wird in Form eines Strukturbildes gezeigt, dass die Steuerung eines technischen Prozesses P über mindestens ein Runtime-System RTS1-RTS3 von industriellen Steuerungen erfolgt. Die Verbindung zwischen den Runtime-Systemen RTS1-RTS3 der Steuerung und dem technischen Prozess P geschieht bidirektional über Ein-/Ausgänge EA1-EA3. Die Programmierung der Steuerung und damit das Festlegen des Verhaltens der Runtime-Systeme RTS1-RTS3 geschieht im Engineering-System ES. Das Engineering-System ES enthält Werkzeuge für die Konfigurierung, Projektierung und Programmierung für Maschinen bzw. für die Steuerung technischer Prozesse. Die im Engineering-System ES erstellten Programme werden über die Informationspfade I1-I3 jeweils in die Runtime-Systeme RTS1-RTS3 der Steuerungen übertragen. Durch die drei Punkte ist angedeutet, dass weitere Steuerungen und Runtime-Systeme vorhanden sein können. Bezüglich seiner Hardware-Ausstattung besteht ein Engineering-System ES üblicherweise aus einem Computersystem mit Graphikbildschirm (z.B. Display), Eingabehilfsmitteln (z.B. Tastatur und Maus), Prozessor, Arbeits- und Sekundärspeicher, eine Einrichtung für die Aufnahme computerlesbarer Medien (z.B. Disketten, CDs) sowie Anschlusseinheiten für einen Datenaustausch mit anderen Systemen (z.B. weiteren Computersystemen, weitere Steuerungen für technische Prozesse) oder Medien (z.B. Internet). Eine Steuerung besteht üblicherweise aus Eingabe- und Ausgabeeinheiten sowie aus Prozessor und Programmspeicher.

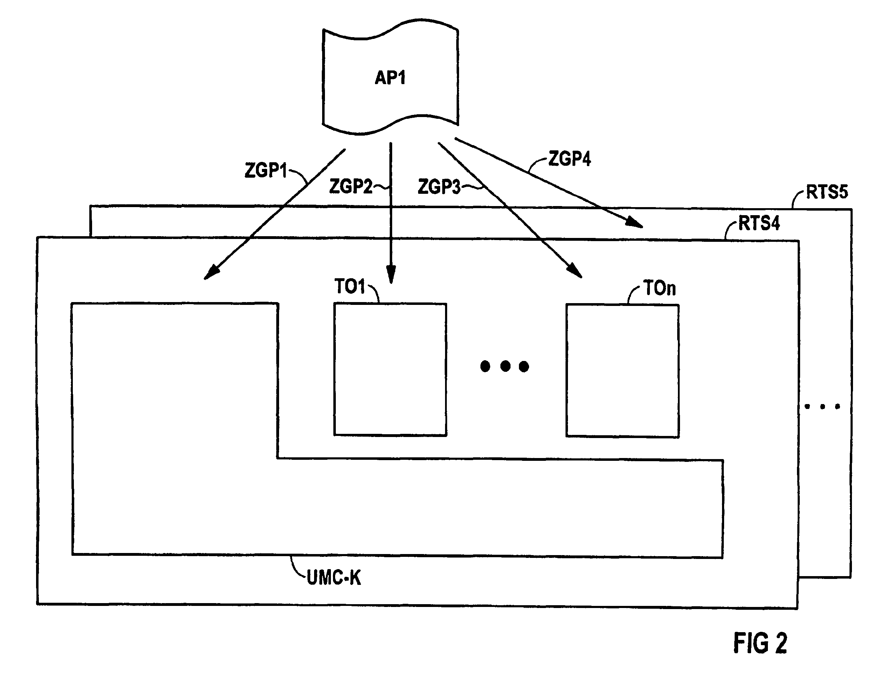

Die Darstellung gemäß FIG 2 zeigt zwei Runtime-Systeme RTS4 und RTS5 von industriellen Steuerungen, dargestellt als Rechteck. Die Runtime-Systeme RTS4 und RTS5 enthalten jeweils einen UMC-Kernel UMC-K sowie die Technologischen Objekte TO1 bis TOn, wobei sowohl die jeweiligen UMC-Kernels als auch die Technologischen Objekte unterschiedlich sein können, die Technologischen Objekte auch in ihrer Anzahl. Der UMC-Kernel UMC-K stellt das Basissystem der Steuerung dar, dieses Basissystem enthält die Grundfunktionalität der Steuerung. Der UMC-Kernel UMC-K ist in rechtwinkliger Stufenform dargestellt. Zu ihm können Technologische Objekte TO1 bis TOn hinzugeladen werden. Durch dieses Hinzuladen wird der Funktionsumfang des Basissystems erweitert. Die Technologischen Objekte TO1 bis TOn sind als Rechtecke dargestellt, durch ihre Anordnung in FIG 2 wird angedeutet, dass sie den UMC-Kernel UMC-K erweitern. Durch die drei Punkte wird angedeutet, dass ein bis mehrere Technologische Objekte TO1 bis TOn hinzugeladen werden können und somit eine technologische Skalierung der gesamten Steuerung erreicht wird. Zentriert am oberen Rand von FIG 2 ist das Anwenderprogramm AP1 in Form einer schematischen Papierfahne dargestellt. Durch die Zugriffspfeile ZGP1 bis ZGP4 ist dargestellt, dass ein Anwender in seinem Anwenderprogramm AP1 direkt auf Funktionalitäten des UMC-Kernels UMC-K, aber auch auf Funktionalitäten der Technologischen Objekte TO1 bis TOn zugreifen kann, sowohl von RTS4 als auch von RTS5 oder von einem weiteren Runtime-System (ebenfalls angedeutet durch drei Punkte). Diese angebotenen Funktionalitäten der Runtime-Systeme RTS4 und RTS5 (oder von weiteren Runtime-Systemen) kann ein Anwender direkt in seinem Anwendungsprogramm AP1 verwenden.

Zur Präzisierung: Zur Erweiterung des Basissystems eines Runtime-Systems werden Technologieobjekte üblicherweise in Form von Technologieobjekttypen hinzugeladen. Solche Technologieobjekttypen sind z.B. Achsen, Nocken, Kurvenscheiben oder ähnliches. Technologieobjekttypen sind instanziierbar. Ein Anwender verwendet in seinen Anwendungsprogrammen AP1 für konkrete Applikationen Instanzen von Technologieobjekttypen. Solche Instanzen sind dann projektweit eindeutig definiert und identifizierbar. Die direkte Verwendung von zugeladenen Technologischen Objekten in Anwenderprogrammen AP1 als jeweils eigenständige Programmobjekte wäre prinzipiell auch denkbar, ist aber für einen Anwender für die Programmerstellung unflexibel.

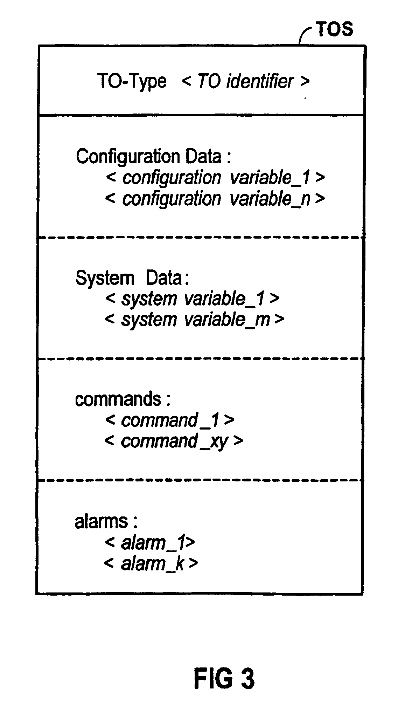

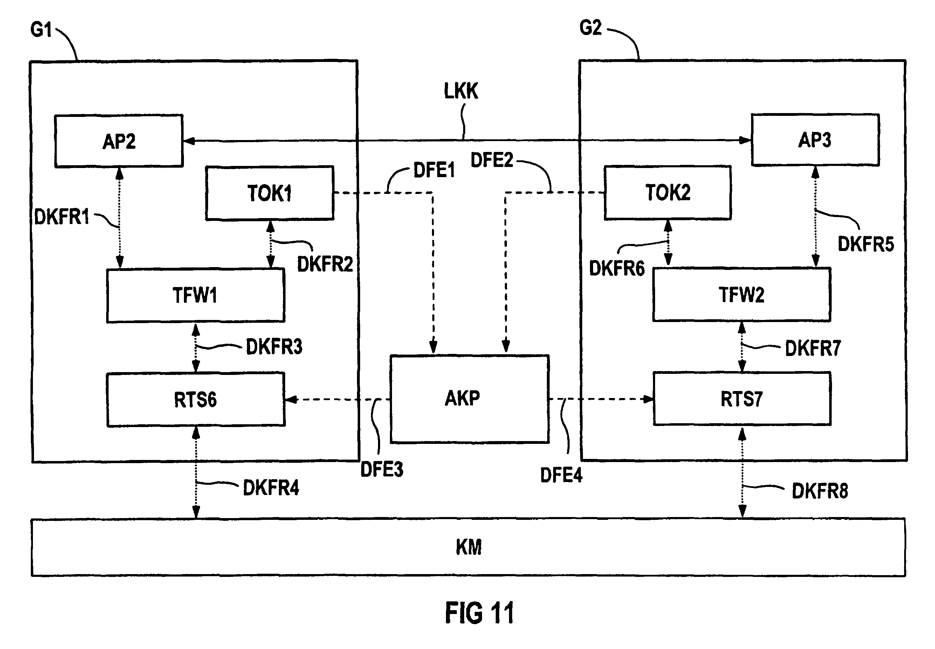

Die Darstellung gemäß FIG 3 zeigt in einer abstrakten Schemadarstellung die Anwendersicht eines Technologischen Objektes, d.h. einer Instanz eines Technologieobjekttyps. Diese Spezifikation eines Technologischen Objektes TOS wird als Rechteck dargestellt, das aus fünf Teilen besteht. Der oberste erste Teil, abgetrennt von den folgenden Teilen durch eine durchgezogene Linie, enthält den Typ des zugrunde liegenden Technologischen Objektes (TO-Type) und den TO-Identifier, d.h. die projekteindeutige Bezeichnung der Instanziierung. Der nächst folgende Teil enthält die Konfigurationsdaten (Configuration Data) mit den Konfigurationsvariablen <configuration variable_1> bis <configuration variable_n>. Über die Konfigurationsdaten wird das Technologische Objekt in seiner grundsätzlichen Wirkungsweise eingestellt. Die Konfigurationsdaten werden über das Engineering-System (ES; FIG 1) eingestellt und können optional über Zugriffsfunktionen aus dem Anwenderprogramm (AP1; FIG 2 und AP2, AP3; FIG 11) heraus gelesen bzw. geschrieben werden. In der Darstellung gemäß FIG 3 werden die Konfigurationsdaten durch eine gestrichelte Linie von den Systemvariablen (System Data) abgetrennt. Die Systemvariablen <system variable_1> bis <system variable_m> sind aus dem Anwenderprogramm (AP1; FIG 2 und AP2, AP3; FIG 11) heraus veränderbar und wie Programmvariable nutzbar. Systemvariablen können lesbar oder les-/schreibbar sein. Durch die Systemvariablen werden außerdem die Zustände von Technologischen Objekten repräsentiert. Zustandsübergänge können durch Ereignisse und/oder Befehle ausgelöst werden. Über die Konfigurationsdaten und die Systemvariablen erfolgt die Parametrierung der Technologischen Objekte. Der nächste Abschnitt sind die Befehle (Commands), von den Systemvariablen ebenfalls durch eine gestrichelte Linie getrennt. Die Befehle <command_1> bis <command_xy> stellen aufrufbare Funktionen dar, die die Funktionalität eines Technologischen Objekts repräsentieren. Diese Funktionen haben definierte Bezeichner, Funktionsparameter und lokale Werte. Die Funktionen können Parameter besitzen. Beim Aufruf von Funktionen können optionale Parameter weggelassen werden, hierfür werden dann Defaultwerte eingesetzt.

Zusätzlich zur technologischen Funktionalität besitzt ein Technologisches Objekt aber auch Befehle, die das Grundverhalten des Technologischen Objektes bestimmen, z.B.
- Befehl zum Rücksetzen in einem definierten Ausgangszustand.
- Befehl, um einen anstehenden Fehler gezielt rückzusetzen.
- Befehle, um in den Simulationsbetrieb zu setzen und rückzusetzen (im Simulationsbetrieb erfolgt ein Durchlauf des Programms ohne konkrete Ausgabe an die Aktoren bzw. Einlesen von den Sensoren).
- Befehle, um das Technologische Objekt aktiv/inaktiv zu setzen
- Auskunftsfunktionen.

Der nächste Abschnitt der Spezifikation eines Technologischen Objektes TOS sind die Alarme (alarms). In FIG 3 sind die Alarme durch eine gestrichelte Linie von den Befehlen abgetrennt. Die Darstellung gemäß FIG 3 enthält die Alarme <alarm_1> bis <alarm_k>. Ein Technologisches Objekt hat Überwachungen und kann im Fehlerfall definierte Alarme, gegebenenfalls mit Alarminformationen und vordefinierten Reaktionen, absetzen. Die technologischen Alarme werden am Technologischen Objekt festgestellt bzw. erzeugt. Technologische Alarme haben eine technologieobjekttypspezifisch eingestellte Reaktion, z.B. Bewegungsstopp (die möglichen Reaktionen sind technologieobjekttypspezifisch und daher bei den einzelnen Technologieobjekttypen explizit beschrieben). Weiterhin besitzen die technologischen Alarme einen technologieobjekttypspezifischen Identifikator (z.B. Alarmnummer) und Parameter. Sie besitzen somit ein einstellbares Verhalten auf die Programmbearbeitung (globale Reaktion) und erlauben weiterhin für jeden Fehler instanzspezifische Einstellungen und Reaktionen, die bei der Inbetriebnahme am Engineering-System (ES; FIG 1) vorgenommen werden.

Ein Anwender kann Befehle von Technologischen Objekten synchron oder asynchron nutzen, je nach Einstellung. Dadurch kann ein Befehl sowohl zyklisch geschrieben (üblich bei einer Speicherprogrammierbaren Speicherung) aber auch ereignisgesteuert (üblich bei Bewegungssteuerungen) programmiert werden. Im synchronen Modus bleibt z.B. das technologische Objekt, das einen Positionierbefehl ausführt, solange in seinem Zustand, bis das Positionierziel erreicht wurde. Im asynchronen Modus dagegen läuft zeitgleich zur Ausführung des Positionierbefehls das Technologische Objekt in seinem Programmablauf weiter und kann dabei andere Zustände einnehmen. Das Technologische Objekt kann dann z.B. durch Polling geprüft werden, ob das Positionierziel erreicht wurde.

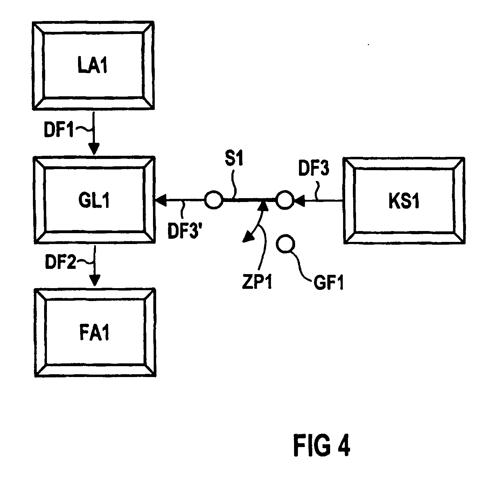

Die Darstellung gemäß FIG 4 zeigt als Verschaltungsdiagramm die Verschaltung des Technologischen Objektes "Gleichlauf" GL1 mit anderen Technologischen Objekten. Die Technologischen Objekte werden dabei als doppelt umrandete Rechtecke dargestellt, bei denen die jeweils zusammen gehörenden Ecken durch eine Verbindungslinie verbunden sind. Durch die Verschaltung des Technologischen Objektes "Gleichlauf" GL1 mit den Technologischen Objekten "Leitachse" LA1, "Folgeachse" FA1 und "Kurvenscheibe" KS1 wird ein Gleichlaufverbund hergestellt. Die Verschaltung der Technologischen Objekte erfolgt über Datenflüsse DF1 bis DF3 bzw. DF3'. FIG 4 zeigt die prinzipielle Technologieanordnung für die Realisierung eines Gleichlaufverbundes: Leitwert - Technologisches Objekt "Gleichlauf" GL1 - Technologisches Objekt "Folgeachse" FA1. In FIG 4 wird der Leitwert durch das Technologische Objekt "Leitachse" LA1 repräsentiert. Weiterhin ist in FIG 4 ist dargestellt, dass das Technologische Objekt "Leitachse" LA1 über den Datenflusspfeil DF1 den Leitwert für das Technologische Objekt "Gleichlauf" GL1 vorgibt. Das Technologische Objekt "Leitachse" LA1 kann z.B. eine Positionierachse repräsentieren. Der Leitwert kann aber auch über eine virtuelle Achse d.h. gerechnete (nicht real vorhandene) Achse oder über externe Geber für das Technologische Objekt "Gleichlauf" GL1 vorgegeben werden. Das Technologische Objekt "Gleichlauf" GL1 stellt als technologische Funktionalität Getriebegleichlauf oder Kurvengleichlauf zur Verfügung. Damit können Aufsynchronisieren, Absynchronisieren oder Masterumschaltungen vorgenommen werden. Am Technologischen Objekt "Gleichlauf" GL1 kann als Gleichlaufgesetz wahlweise ein Getriebe oder eine Kurve gewählt werden. Der rechte Teil von FIG 4 stellt diese Auswahlmöglichkeiten dar. Durch den Zuordnungspfeil ZP1 ist dargestellt, dass der Schalter S1 wahlweise mit einem Getriebe, dargestellt durch den Getriebefaktor GF1 oder mit dem Technologischen Objekt "Kurvenscheibe" KS1 verbunden werden kann. Bei einer Verbindung mit dem Technologischen Objekt "Kurvenscheibe" KS1 erfolgte Datenfluss von diesem Technologischen Objekt zum Technologischen Objekt "Gleichlauf" GL1 über den Datenflusspfeil DF3, den Schalter S1 und den Datenflusspfeil DF3'. Bei einer Verbindung mit dem Getriebefaktor GF1 erfolgt der Datenfluss zum Technologischen Objekt "Gleichlauf" GL1 über den Schalter S1 und den Datenflusspfeil DF3'. Über das Technologische Objekt "Kurvenscheibe" KS1 können nicht lineare Getriebeübersetzungen am Technologischen Objekt "Gleichlauf" GL1 eingestellt werden, über den Getriebefaktor GF1 dagegen lineare Getriebeübersetzungen. Durch den Datenflusspfeil DF2 ist das Technologische Objekt "Gleichlauf" GL1 mit dem Technologischen Objekt "Folgeachse" FA1 verschaltet.

Die Darstellung gemäß FIG 4 zeigt somit die prinzipielle Konfiguration von Technologischen Objekten zur Realisierung einer Gleichlauffunktionalität und kann ihrerseits als (komplexes) Technologisches Objekt angesehen und verwendet werden.

Die Festlegung der Verschaltung der Technologischen Objekte erfolgt in der Konfigurationsphase (Projektierung). Bei Auswahlmöglichkeiten werden diese zur Laufzeit über das Anwenderprogramm (AP1; FIG 2 und AP2, AP3; FIG 11) aktiviert, d.h. zur Laufzeit können Umschaltungen programmiert werden. Prinzipiell können durch Verschaltung mehr als ein "Gleichlaufobjekt" GL1 mit einer "Folgeachse" FA1 verbunden werden, dadurch wird eine Überlagerung von Gleichlauffunktionen realisiert. Der Leitwert für das "Gleichlaufobjekt" GL1 kann auch direkt aus dem Anwenderprogramm (AP1; FIG 2 und AP2, AP3; FIG 11) vorgegeben werden. Weiterhin kann mehr als ein Technologisches Objekt für die Leitwertbereitstellung konfiguriert werden. Die aktuelle Verschaltung wird wiederum zur Laufzeit über Befehle im Anwenderprogramm (AP1; FIG 2 und AP2, AP3; FIG 11) ausgewählt und aktiviert. Außerdem kann für die Festlegung des Gleichlaufgesetzes zwischen verschiedenen Technologischen Objekten "Kurvenscheibe" KS1 und/oder zwischen verschiedenen Getriebefaktoren GF1 durch Programmierung online umgeschaltet werden. Ein Technologisches Objekt "Kurvenscheibe" KS1 kann einem oder mehreren Technologischen Objekten "Gleichlauf" GL1 zugeordnet werden. Weiterhin können von einem Technologischen Objekt "Leitachse" LA1 eine oder mehrere Gleichlaufverbindungen über Technologische Objekte "Gleichlauf" GL1 konfiguriert werden.

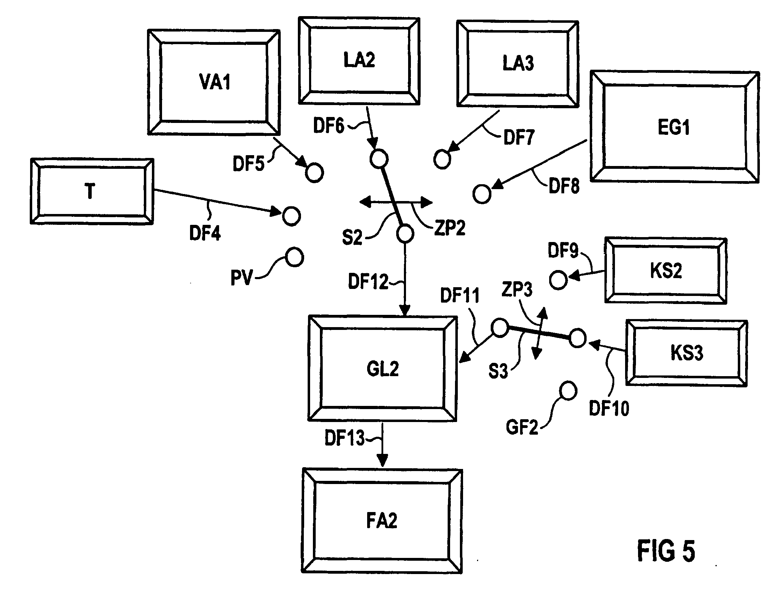

Die Darstellung gemäß FIG 5 zeigt einen Gleichlaufverbund mit Umschaltmöglichkeiten zwischen verschiedenen Leitwertquellen und Gleichlaufgesetzen, ebenfalls in Form eines Verschaltungsdiagramms. In FIG 5 kann das Technologische Objekt "Gleichlauf" GL2 Leitwerte von den Technologischen Objekten "Zeit" T, "virtuelle Achse" VA1, "Leitachse" LA2, "Leitachse" LA3, "externer Geber" EG1 sowie von einem Programmwert TV des Anwenderprogrammes (AP1; FIG 2 und AP2, AP3; FIG 11) bekommen. Durch den Zuordnungspfeil ZP2 ist angedeutet, dass der Schalter S2 unterschiedliche Leitwertverbindungen für das Technologische Objekt "Gleichlauf" GL2 herstellen kann. Über einen der Datenflüsse DF4 bis DF8 sowie über den Schalter S2 und den Datenfluss DF12 wird die "Leitwertverschaltung" zum Technologischen Objekt "Gleichlauf" GL2 erreicht. Die Technologischen Objekte "Zeit" T, "virtuelle Achse" VA1, "Leitachse" LA2 und LA3, "externer Geber" EG1 sowie der Programmwert TV sind die potentiellen Master für das Technologische Objekt "Gleichlauf" GL2. Die möglichen Verschaltungen werden projektiert und die Auswahl eines projektierten Masters kann zur Laufzeit aus dem Anwenderprogramm (AP1; FIG 2 und AP2, AP3; FIG 11) erfolgen. Damit sind Masterumschaltungen möglich. Das Technologische Objekt "virtuelle Achse" VA1 repräsentiert nicht eine real vorhandene Achse, sondern eine gerechnete Achse. "Virtuelle Achsen" sind dadurch gekennzeichnet, dass sie über Befehle kommandiert werden können und eine Bewegungsführung bzw. Interpretation besitzen, aber keine Regelung und keinen Antrieb. Die Technologischen Objekte "Leitachse" LA2 und LA3 repräsentieren dagegen reale Achsen. Reale Achsen repräsentieren Standardachsen mit Antrieb, Motor, Geber, sie besitzen also einen realen Aktor. Auch das Technologische Objekt "externer Geber" EG1 kann einen Leitwert für das Technologische Objekt "Gleichlauf" GL2 bereitstellen. Ein "externer Geber" EG1 besitzt üblicherweise keine Achse und stellt die Informationen in einem projektierbaren Format bereit. "Externe Geber" sind z.B. Winkelgeber an einer Presse. Auch vom Technologischen Objekt "Zeit" T und vom Programmwert TV können Leitwerte für das Technologische Objekt GL2 bereitgestellt werden. Ein Technologisches Objekt "Zeit" stellt einen Leitwert in Form eines Zeitwertes bzw. Zeitfaktors bereit, die Projektierung eines Programmwertes DV als Leitwert erfolgt im Anwenderprogramm (AP1; FIG 2 und AP2, AP3; FIG 11). Die Technologischen Objekte sind hierbei in der üblichen Notation dargestellt.

In FIG 5 ist dargestellt, dass als Gleichlaufgesetz für das Technologische Objekt "Gleichlauf" GL2 wahlweise ein Getriebefaktor GF2 oder die Technologischen Objekte "Kurvenscheiben" KS2 und KS3 gewählt werden können. Durch den Zuordnungspfeil ZP3 ist dargestellt, dass der Schalter S3 wahlweise zwischen den Technologischen Objekten KS2, KS3 und dem Getriebefaktor GF2 eingestellt werden kann. Die "getriebemäßige Verschaltung" mit dem Technologischen Objekt "Gleichlauf" GL2 erfolgt dann über die Datenflusspfeile DF9, DF10, den eingestellten Schalter S3 sowie über den Datenflusspfeil DF11. Die Schaltverbindungen S2 und S3 sind im Anwenderprogramm (AP1; FIG 2 und AP2, AP3; FIG 11) programmierbar. Über den Datenflusspfeil DF 13 ist das Technologische Objekt "Gleichlauf" GL2 mit dem Technologischen Objekt "Folgeachse" FA2 verbunden. Das Technologische Objekt "Gleichlauf" GL2 wird bei der Projektierung also slaveseitig mit dem Technologischen Objekt "Folgeachse" FA2, das z.B. eine Gleichlaufachse repräsentieren kann, verschaltet. Masterseitig wird das Technologische Objekt "Gleichlauf" GL2 mit einem Technologischen Objekt verschaltet, das einen Leitwert zur Verfügung stellt; dieser Leitwert kann auch direkt aus dem Anwenderprogramm (AP1; FIG 2 und AP2, AP3; FIG 11) vorgegeben werden. Somit kann mehr als ein Technologisches Objekt für die Leitwertbereitstellung konfiguriert werden, die aktuelle Verschaltung wird zur Laufzeit über Befehle im Anwenderprogramm ausgewählt.

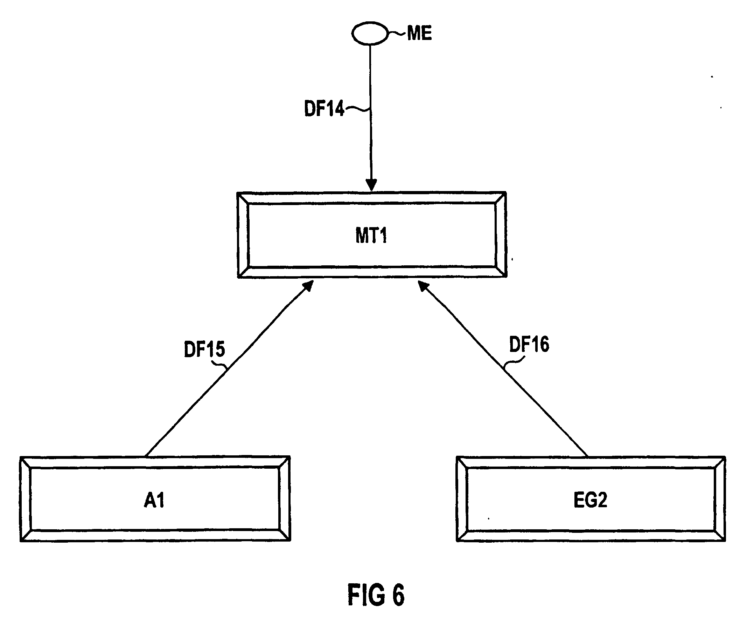

Die Darstellung gemäß FIG 6 zeigt die Verschaltung des Technologischen Objektes "Messtaster" MT1. Die Technologischen Objekte sind hierbei in der üblichen Notation dargestellt. Das Technologische Objekt "Messtaster" MT1 stellt die Funktionalität zur Durchführung eines Messauftrages bereit. Für die Funktionen am Technologischen Objekt "Messtaster" MT1 können Messaufträge aktiviert und parametriert werden. Über den Messeingang ME und den Datenflusspfeil DF14 wird der Messwert an das Technologische Objekt "Messtaster" MT1 geliefert. Der Messeingang ME ist als Ellipse dargestellt. Ein Messeingang ME kann mit mehreren Technologischen Objekten "Messtaster" verschaltet sein. Diese Technologischen Objekte "Messtaster" können dabei auch gleichzeitig aktiviert sein. Ein Messeingang ME entspricht dabei üblicherweise einem Hardware-Messeingang, der dem Technologischen Objekt "Messtaster" MT1 über Konfiguration zugeordnet wird. Weiterhin ist das Technologische Objekt "Messtaster" MT1 mit mindestens einem Technologischen Objekt verschaltet, das einen Messwert (z.B. Position) liefert. In FIG 6 ist das Technologische Objekt "Messtaster" MT1 mit den Technologischen Objekten "Achse" A1 und "externer Geber" EG2 über die Datenflusspfeile DF15 bzw. DF16 verschaltet. Das Technologische Objekt "Achse" A1 kann z.B. eine Positionierachse oder eine Gleichlaufachse sein. Ein Technologisches Objekt, das einen Messwert liefert, kann mit mehreren Technologischen Objekten "Messtaster" verschaltet werden.

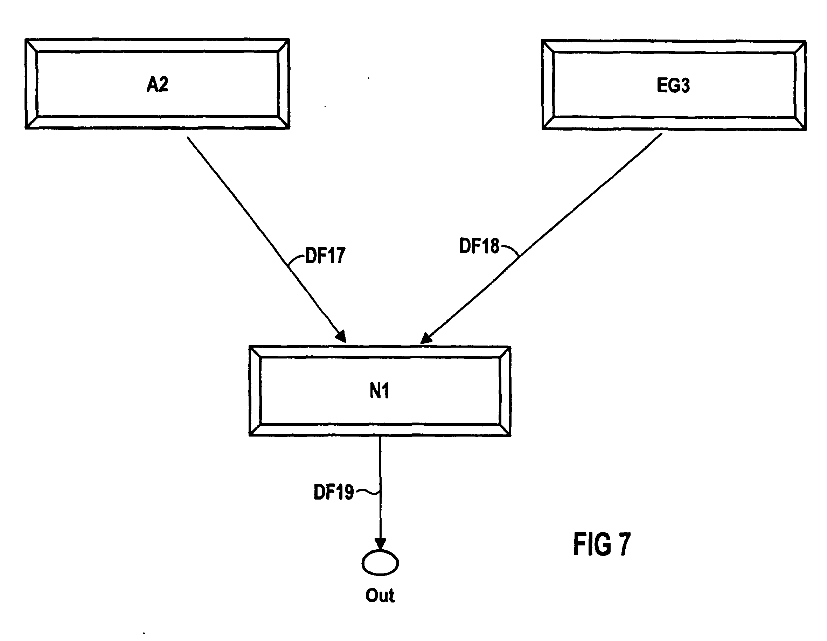

Die Darstellung gemäß FIG 7 zeigt in einem Verschaltungsdiagramm das Technologische Objekt "Nocke" N1, verschaltet mit den Technologischen Objekten "Achse" A2 und "externer Geber" EG3. Das Technologische Objekt "Achse" A2 ist über den Datenflusspfeil DF17, das Technologische Objekt "externer Geber" EG3 über den Datenflusspfeil DF18 mit dem Technologischen Objekt "Nocke" N1 verschaltet. Über den Datenflusspfeil DF19 ist das Technologische Objekt "Nocke" N1 mit dem Ausgang Out verschaltet, der Ausgang Out ist als Ellipse dargestellt. Das Technologische Objekt "Nocke" N1 stellt die Funktionalität zur Berechnung von Nockenschaltwerten bereit. Über die Funktionen am Technologischen Objekt "Nocke" N1 können Nockenfunktionen aktiviert und parametriert werden. Die Technologischen Objekte "Achse" A2 bzw. "externer Geber" EG3 stellen die Bezugswerte für das Technologische Objekt "Nocke" N1 bereit. Die Zuordnung dieser Technologischen Objekte zum Technologischen Objekt "Nocke" N1 wird vom Anwender projektiert. Der Anwender projektiert weiterhin die Zuordnung des Technologischen Objektes "Nocke" N1 zu einem Ausgang Out, dabei ist auch eine Zuordnung auf interne Variablen möglich. Für eine aktuelle Anwendung ist das Technologische Objekt "Nocke" N1 mit genau einem Technologischen Objekt verschaltet, das den Bezugswert liefert.

Ein Bezugswert ist z.B. ist eine Achsposition. Hierbei kann das Technologische Objekt "Achse" A2 z.B. eine Positionierachse oder eine Gleichlaufachse repräsentieren. Dies ist möglich, dass eine Zuordnung des Technologischen Objektes "Nocke" N1 auf einen Ausgang Out entfallen kann, dann wirkt das Technologische Objekt "Nocke" N1 nur auf Systemvariablen am Technologischen Objekt (z.B. für die Verwendung des Technologischen Objektes als interne Nocke). Das Technologische Objekt, das den Bezugswert liefert, kann mit mehreren auch unterschiedlichen Technologischen Objekten Nocken gleichzeitig verschaltet sein. Die Technologischen Objekte sind hierbei in der üblichen Notation dargestellt.

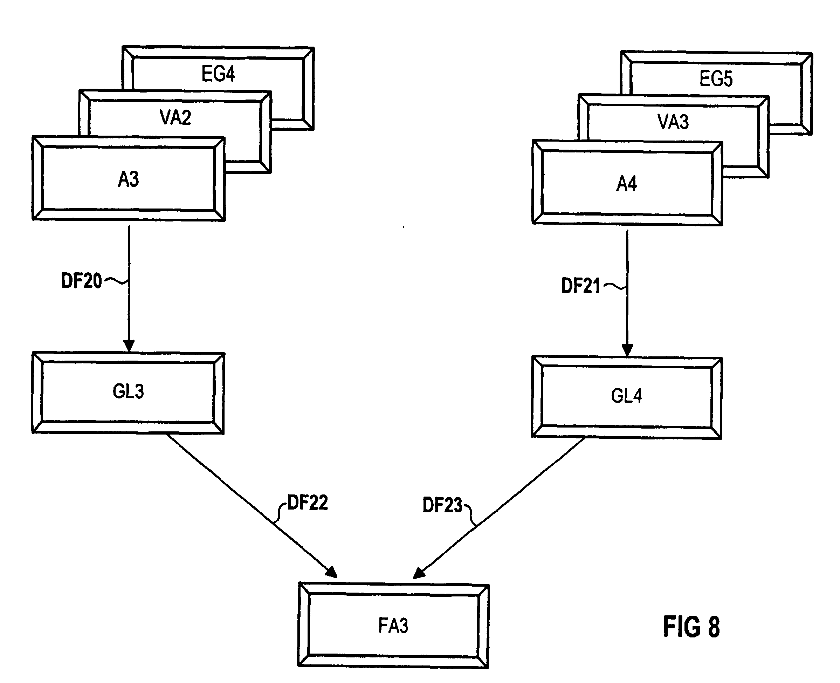

In der Darstellung gemäß FIG 8 wird gezeigt, dass ein Technologisches Objekt "Folgeachse" FA3 mit mehreren Technologischen Objekten "Gleichlauf" GL3 und GL4 verschaltet sein kann. Das Technologische Objekt "Folgeachse" FA3 ist durch den Datenflusspfeil DF22 mit dem Technologischen Objekt "Gleichlauf" GL3 und mit dem Datenflusspfeil DF23 mit dem Technologischen Objekt "Gleichlauf" GL4 verschaltet. Die Technologischen "Gleichlaufobjekte" GL3 und GL4 erhalten über die Datenflusspfeile DF20 bzw. DF21 ihre Leitwertvorgaben. In FIG 8 ist dargestellt, dass die Leitwerte für den jeweiligen Gleichlaufverbund über unterschiedliche Technologische Objekte erfolgen kann. So können für das Gleichlaufobjekt GL3 z.B. das Technologische Objekt "Achse" A3, das Technologische Objekt "virtuelle Achse" VA2 oder das Technologische Objekt "externer Geber" EG4 den Leitwert bereitstellen. Für das "Gleichlaufobjekt" GL4 kann dementsprechend der Leitwert z.B. von den Technologischen Objekten "Achse" A4, "virtuelle Achse" VA3 oder "externer Geber" EG5 bereitgestellt werden. In FIG 8 bilden dann z.B. die Technologischen Objekte "Achse" A4, "Gleichlauf" GL4 und "Folgeachse" FA3 einen Gleichlaufverbund. Die jeweils gewünschte Verschaltung wird vom Anwender projektiert, die Auswahl eines projektierten Masters (der Master stellt den Leitwert für den Gleichlaufverbund zur Verfügung) kann zur Laufzeit aus dem Anwenderprogramm erfolgen, damit sind Masterumschaltungen möglich. In FIG 8 stellt das Technologische Objekt "Folgeachse" FA3 den Slave im Gleichlaufverbund dar. Die Technologischen Objekte sind hierbei in der üblichen Notation dargestellt.

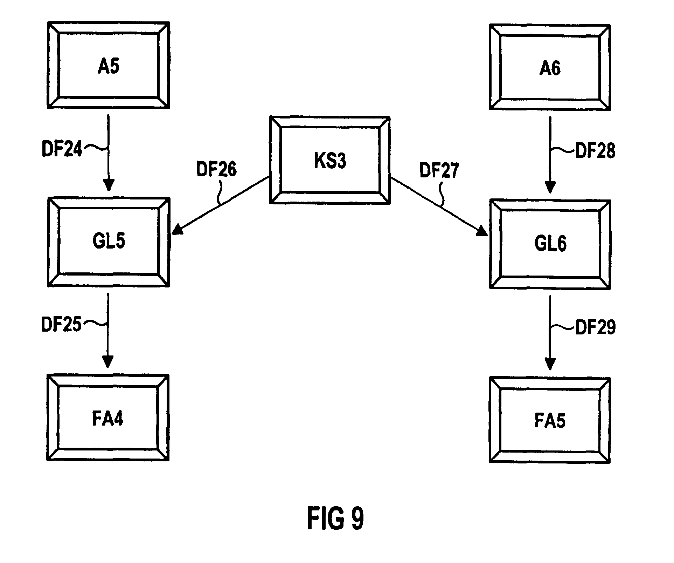

Die Darstellung gemäß FIG 9 zeigt ein Verschaltungsdiagramm, bei dem das Technologische Objekt "Kurvenscheibe" KS3 das Getriebegesetz für zwei "Gleichlaufobjekte" GL5 und GL6 über die Datenflusspfeile DF26 bzw. DF27 bereitstellt. In FIG 9 sind somit zwei Gleichlaufverbünde dargestellt, die jeweils vom gleichen Technologischen Objekt "Kurvenscheibe" KS2 mit einem gemeinsamen Getriebegesetz versorgt werden. Die beiden Gleichlaufverbünde sind links und rechts vom Technologischen Objekt "Kurvenscheibe" KS3 angeordnet. Der linke Gleichlaufverbund wird gebildet durch das Technologische Objekt "Achse" A5, das den Leitwert bereitstellt und somit als Leitachse gilt. Es kann sich dabei z.B. um eine Positionier- oder Gleichlaufachse handeln. Das Technologische Objekt "Achse" A5 ist über den Datenflusspfeil DF24 mit dem "Gleichlaufobjekt" GL5 verbunden. Über diesen Datenflusspfeil DF24 wird der Leitwert bereitgestellt. Auf der Slaveseite ist das Technologische Objekt "Gleichlauf" GL5 über den Datenflusspfeil GF25 mit dem Technologischen Objekt "Folgeachse" FA4 verbunden. Der rechte Gleichlaufverbund wird gebildet durch die Technologischen Objekte "Achse" A6, "Gleichlauf" GL6 und "Folgeachse" FA5. Die "Achse" A6 entspricht dabei der Leitachse, die "Folgeachse" FA5 repräsentiert eine Slaveachse. Die Verschaltung erfolgt hierbei über die Datenflusspfeile DF28 bzw. DF29. Weiterhin ist es möglich, dass von einer Leitachse aus eine oder mehrere Gleichlaufverbindungen über Gleichlaufobjekte konfiguriert werden. Technologische Objekte "Kurvenscheibe" können einem oder mehreren Gleichlaufobjekten zugeordnet werden. Die Zusammenstellung des Gleichlaufverbundes wird vom Anwender projektiert. Projektierte Gleichlaufverbünde können wiederum als Technologische Objekte repräsentiert werden und ihre Funktionalität in anderen Applikationen wieder verwendet werden. Die Technologischen Objekte sind hierbei in der üblichen Notation dargestellt.

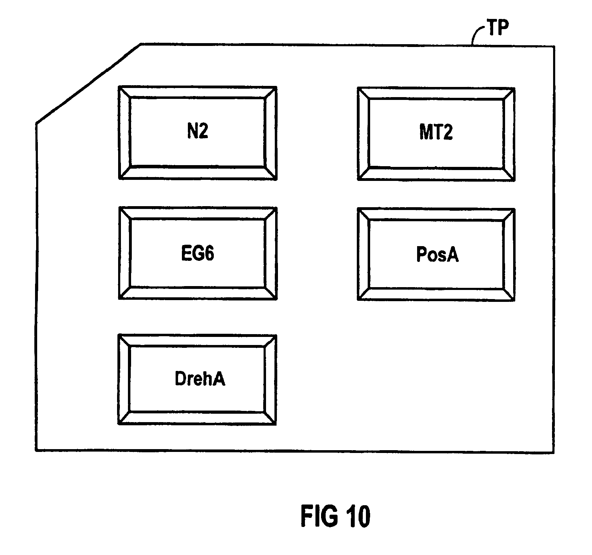

Die Darstellung gemäß FIG 10 zeigt die Zusammenfassung von mehreren Technologischen Objekten zu einem Technologiepaket TP. Das Technologiepaket TP ist dabei als Rechteck dargestellt, wobei die linke obere Ecke abgeschnitten ist. Das Technologiepaket TP enthält die Technologischen Objekte "Nocke" N2, "externer Geber" EG6, "Drehzahlachse" DrehA, "Messtaster" MT2 sowie "Positionierachse" PosA. Die Technologischen Objekte sind dabei in der üblichen Notation dargestellt. Die Technologischen Objekte repräsentieren dabei keine Instanzen, sondern Technologieobjekttypen. Ein Technologiepaket TP enthält somit eine Ansammlung von Technologieobjekttypen, die gewisse Funktionalitäten repräsentieren. Die Zuladung von Technologischen Objekten ins Runtime-System der Steuerung und damit die funktionelle Erweiterung der Steuerung erfolgt über Technologiepakete. Ein Anwender kann sich bestimmte Technologiepakete TP, die wiederum Technologieobjekttypen enthalten, ins Runtime-System (RTS4, RTS5; FIG 2) laden und somit eine technologische Skalierung der Funktionalität der Steuerung erreichen. Weiterhin kann durch die Technologiepakete TP bei entsprechender Zuordnung von Technologieobjekttypen eine funktionelle Strukturierung erreicht werden.

Die Darstellung gemäß FIG 11 zeigt in einem Übersichtsbild die Kommunikationsstruktur zwischen zwei Geräten G1 und G2. Gerät bedeutet in diesem Kontext Hardware mit CPU. Die technologische Funktionalität wird in Form von Technologischen Objekten auf Geräte verteilt, auf denen sie letztendlich ablaufen. Sofwaretechnisch werden die Geräte G1 und G2 als sog. System-Technologische Objekte (System-TO) dargestellt. Ein System-TO kann nicht verschoben werden, weil es fest an einem Gerät hängt. In einem System-TO ist die Funktionalität des dazugehörigen Gerätes gekapselt. Die System-TOs repräsentieren die Gerätefunktionalität, die Technologischen Objekte die technologische Funktionalität.

Die Geräte G1 und G2 sind in der Darstellung gemäß FIG 11 jeweils als Rechtecke in der linken bzw. rechten Zeichnungshälfte dargestellt. Die Geräte G1 und G2 enthalten jeweils ein Anwenderprogramm AP2 bzw. AP3, TO-Konfigurationen TOK1 bzw. TOK2, technologische Firmware TFW1 bzw. TFW2 und jeweils ein Runtime-System RTS6 bzw. RTS7, wobei alle diese Teilelemente durch Rechtecke dargestellt sind. Die Anwenderprogramme AP2 bzw. AP3 beinhalten die vom Anwender erstellten Befehle zur Steuerung des technologischen Prozesses (P; FIG1), bei Bewegungssteuerungen z.B. Positionier- und/oder Bewegungsbefehle. Die technologische Firmware TFW1 bzw. TFW2 stellt die technologische Funktionalität dar, um die das Basissystem (UMC-K; FIG2) der Runtime-Systeme RTS6 bzw. RTS7 erweitert wurde. Die technologische Firmware TWF1 bzw. TWF2 beinhaltet die zugeladenen Technologieobjekttypen, deren Instanzen ein Anwender in seinen Anwenderprogrammen AP2 bzw. AP3 verwenden kann. Die TO-Konfigurationen TOK1 bzw. TOK2 beinhalten Konfigurationsinformationen der Technologischen Objekte (z.B. Verschaltungs- und Verteilungsinformationen). Die Konfigurationen erfolgen im Engineering-System (ES; FIG1). Im Runtime-System RTS6 bzw. RTS7 kommen die Anwenderprogramme letztendlich zum Laufen. Die Runtime-Systeme RTS6 bzw. RTS7 entsprechen einem Betriebssystem und sind z.B. für die Speicherverwaltung und die Rechenzeitverwaltung verantwortlich. Auf die Darstellung weiterer Inhaltselemente der Geräte G1 bzw. G2 wird aus Gründen der Übersichtlichkeit verzichtet.

In der unteren Zeichnungshälfte ist das Kommunikationsmedium KM als langgezogenes Rechteck dargestellt. Das Kommunikationsmedium KM kann z.B. eine Busverbindung darstellen.

Zwischen den Geräten G1 und G2 ist die automatische Kommunikationsprojektierung AKP, ebenfalls als Rechteck dargestellt. Die automatische Kommunikationsprojektierung AKP ist üblicherweise Software, die als Teil des Engineering-Systems (ES; FIG1) abläuft und das Runtime-System RTS6 bzw. RTS7 mit den generierten Kommunikationsinformationen (z.B. wer kommuniziert mit wem? Auf welche Weise erfolgt die Kommunikation?) versorgt.

Der bidirektionale Pfeil LKK zwischen den Anwenderprogrammen AP2 und AP3 stellt einen logischen Kommunikationskanal zwischen den Anwenderprogrammen AP2 und AP3 dar. Der Anwender sieht dabei nur seine Technologischen Objekte, die er selbst in seinen Anwenderprogrammen verwendet, und er kann dabei davon abstrahieren, wo sie physikalisch liegen.

Die gestrichelten unidirektionalen Pfeile DFE1 bis DFE4 stellen den Datenfluss zum Engineering-Zeitpunkt dar. Die automatische Kommunikationsprojektierung AKP wird dabei aus den TO-Konfigurationen TOK1 und TOK2 mit Konfigurationsinformationen zu den technologischen Objekten (z.B. Verteilungs- und Verschaltungsinformationen) über die Datenflüsse DFE1 bzw. DFE2 versorgt. Über die Datenflüsse DFE3 bzw. DFE4 gibt die automatische Kommunikationsprojektierung AKP die daraus generierten Kommunikationskanäle an die Runtime-Systeme RTS6 bzw. RTS7 der Geräte G1 bzw. G2 weiter. Alle Geräte werden somit von der automatischen Kommunikationsprojektierung AKP so mit Routinginformationen versorgt, dass jedes Gerät mit jedem anderen Gerät entsprechend der in den TO-Konfigurationen TOK1 und TOK2 definierten abstrakten Konfigurations- und Kommunikationsbeschreibung kommunizieren kann. Die automatische Kommunikationsprojektierung AKP verwendet zur Generierung der Kommunikationskanäle projektglobale Variablen, mit denen der Anwender z.B. die Qualitätsanforderungen definieren kann.

Die automatische Kommunikationsprojektierung AKP ermöglicht eine effiziente Nutzung der eingesetzten Geräte- und Netztopologie, da sie auch abstrakte Qualitätsanforderungen (z.B. Broadcast, Taktsynchronität, Übertragungszeiten) optimal auf Geräteeigenschaften und Eigenschaften des Kommunikationsmediums KM (z.B. Profibus) abbildet. Bei der Konfiguration der Technologischen Objekte muss sich der Anwender nicht darum kümmern, wie letztendlich die Kommunikation physikalisch stattfindet.

Die vertikalen bidirektionalen Pfeile DKFR1 bis DKFR8 stellen den Daten- und Kontrollfluss zur Laufzeit (Runtime) dar, z.B. wenn die Geräte G1 bzw. G2 selbst am Kommunikationsmedium KM (das Kommunikationsmedium kann z.B. ein Profibus sein) hängen, anlaufen und in Betrieb sind. Dann erfolgt nämlich wirklich ein "scharfer" Daten- und Kontrollfluss von den Anwenderprogrammen AP2 bzw. AP3 durch die technologische Firmware TFW1 bzw. TFW2 durch das Runtime-System RTS6 bzw. RTS7 auf das Kommunikationsmedium KM, über das Kommunikationsmedium KM zum nächsten Gerät und dort wieder nach oben zum Anwenderprogramm. Im "scharfen Betrieb" eines Gerätes werden natürlich auch die Informationen der TO-Konfiguration TOK1 bzw. TOK2 benötigt.

## Patentansprüche

1. Verfahren zur Programmierung bzw. Projektierung einer industriellen Steuerung für eine Produktionsmaschine, wobei die Steuerung mehrere Geräte (G1, G2) aufweist, mit folgenden Schritten:
a) Verwendung eines Basissystem (UMC-K) pro Gerät (G1, G2) mit einer gerätespezifischen Grundfunktionalität,
b) Instanziierung Technologischer Objekte (TO1 - TOn),
c) Verschaltung der Technologischen Objekte (TO1 - TOn) zu Technologischen Objekten komplexer Funktionalität,
d) Verteilung und/oder Platzierung der Technologischen Objekte (TO1 - TOn) auf die Geräte (G1, G2), so dass die auf die Geräte (G1, G2) verteilten bzw. auf den Geräten (G1, G2) platzierten Technologischen Objekte (TO1 - TOn) die Geräte (G1, G2) um technologische Funktionalitäten ergänzen,
e) automatische Generierung der Kommunikationskanäle zwischen den Technologischen Objekten (TO1 - TOn) einschließlich der geräteübergreifenden Kommunikationskanäle.

2. Verfahren zur Programmierung bzw. Projektierung nach Anspruch 1,
wobei bei der Generierung der Kommunikationskanäle Qualitätsattribute der Technologischen Objekte (TO1 - TOn) eingehalten werden.

3. Verfahren zur Programmierung bzw. Projektierung nach Anspruch 1 oder 2,
wobei die Technologischen Objekte (TO1 - TOn) auf unterschiedlich oder gleich performante Hardware-Systeme und/oder Laufzeitsysteme (RTS1 - RTS7) verteilt werden.

4. Verfahren zur Programmierung bzw. Projektierung nach einem der vorstehenden Ansprüche,
wobei die Darstellung der Technologischen Objekte (TO1 - TOn) in einem Engineering-System (ES) durch grafische Elemente und/oder Masken erfolgt.

5. Verfahren zur Programmierung bzw. Projektierung nach einem der vorstehenden Ansprüche,
wobei Technologieobjekttypen zu Technologischen Paketen (TP) zusammengefasst werden.

## Revendications

1. Procédé de programmation ou de planification d'une commande industrielle pour une machine de production, dans lequel la commande présente plusieurs appareils (G1, G2), le procédé étant doté des étapes suivantes :
a) Utilisation d'un système (UMC-K) de base par appareil (G1, G2) ayant une fonctionnalité de base spécifique à chaque appareil,
b) Instantiation d'objets (TO1 - TOn) technologiques,
c) Câblage des objets (TO1 - TOn) technologiques en des objets technologiques de fonctionnalité complexe,
d) Répartition et/ou placement des objets (TO1 - TOn) technologiques sur les appareils (G1, G2) de telle sorte que les objets (TO1 - TOn) technologiques répartis sur les appareils (G1, G2) ou placés sur les appareils (G1, G2) complètent les appareils (G1, G2) de fonctionnalités technologiques,
e) Génération automatique des canaux de communication entre les objets (TO1 - TOn) technologiques, y compris les canaux de communication allant au-delà des appareils.

2. Procédé de programmation ou de planification suivant la revendication 1,
dans lequel des attributs de la qualité des objets (TO1
- TOn) technologiques sont respectés lors de la génération des canaux de communication.

3. Procédé de programmation ou de planification suivant les revendications 1 ou 2,
dans lequel les objets (TO1 - TOn) technologiques sont répartis sur des systèmes matériels et/ou sur des systèmes (RTS1 - RTS7) à temps de propagation ayant des performances identiques ou différentes.

4. Procédé de programmation ou de planification suivant l'une des revendications précédentes,
dans lequel la représentation des objets (TO1 - TOn) technologiques est effectuée par des éléments graphiques et/ou des masques dans un système (ES) d'ingénierie.

5. Procédé de programmation ou de planification suivant l'une des revendications précédentes,
dans lequel des types d'objets technologiques sont rassemblés en paquets (TP) technologiques.

## Claims

1. Method of programming or project planning of an industrial controller for a production machine with the controller featuring a number of devices (G1, G2), with the following steps:
a) Use of a basic system (UMC-K) per device (G1, G2) with a device-specific basic functionality,
b) Instantiation of technological objects (TO1 - TOn),
c) Interconnection of the technological objects (TO1 - TOn) into technological objects of complex functionality,
d) Distribution and/or placing of the technological objects (TO1 - TOn) on the devices (G1, G2), so that the technological objects (TO1 - TOn) distributed to the devices (G1, G2) or placed on the devices (G1, G2) expand the devices (G1, G2) by technological functionalities,
e) Automatic generation of the communication channels between the technological objects (TO1 - TOn) including the communication channels covering all devices.

2. Method for programming or project planning in accordance with claim 1,
with quality attributes of the technological objects (TO1 - TOn) being adhered to in the generation of the communication channels.

3. Method for programming or project planning in accordance with claim 1 or 2,
with technological objects (TO1 - TOn) being distributed to different or the same high-performance hardware systems and/or runtime systems (RTS1 - RTS7).

4. Method for programming or project planning in accordance with one of the previous claims,
with the technological objects (TO1 - TOn) being represented in a engineering system (ES) by graphical elements and/or masks.

5. Method for programming or project planning in accordance with one of the previous claims,
with technology object types being grouped into technological packages (TP).
